# EUROPÄISCHE PATENTSCHRIFT

(11) **EP 1 254 005 B1**
(45) Veröffentlichungstag und Bekanntmachung des Hinweises auf die Patenterteilung: **12.05.2004**
(21) Anmeldenummer: 00979414.0
(22) Anmeldetag: 04.10.2000
(51) Int. Cl.: B29C 45/40

(54) **AUSWERFEREINRICHTUNG FÜR EINE SPRITZGIESSMASCHINE FÜR KUNSTSTOFFE**
EJECTOR DEVICE FOR AN INJECTION MOULDING MACHINE FOR PLASTICS
DISPOSITIF EJECTEUR POUR UNE PRESSE D'INJECTION DE MATIERES PLASTIQUES

(30) Priorität: 07.02.2000 DE 10005676
(43) Veröffentlichungstag der Anmeldung: 06.11.2002
(73) Patentinhaber: Demag Ergotech GmbH, 90571 Schwaig (DE)
(72) Erfinder: SCHMIDT, Holger, 06567 Bad Frankenhausen (DE)
(74) Vertreter: Meissner, Peter E., Dipl.-Ing.
(86) Internationale Anmeldenummer: PCT/DE2000/003575
(87) Internationale Veröffentlichungsnummer: WO 2001/058659

(56) Entgegenhaltungen:
- DE-A- 2 410 446
- DE-C- 961 395
- US-A- 3 807 682
- PATENT ABSTRACTS OF JAPAN vol. 18, no. 206 (M-1591), 12. April 1994 (1994-04-12) & JP 06 008289 A (NIIGATA ENG CO LTD), 18. Januar 1994 (1994-01-18)

## Beschreibung

Die Erfindung betrifft eine Auswerfereinrichtung für eine Spritzgießmaschine für Kunststoffe mit mindestens einem Auswerferbolzen, der von einem Aktuator durch das Zentrum einer beweglichen Werkzeugaufspannplatte hindurch zur Form hin und von dieser wegbewegbar ist,

Aus EP 0 585 671 A1 ist ein Auswerfer für Formwerkzeuge bei Spritzgießmaschinen bekannt, bei der ein an einer Formträgerplatte vorgesehener Elektromotor sitzt, der über ein Getriebe mit einer drehantreibbaren Gewindespindel in ständiger Stellverbindung steht, die mit einem Auswerferstempel verbunden ist.

Aus EP 0 890 426 A2 ist eine Einrichtung bekannt, bei der ein Servomotor über ein Endlosband mit einer Kugelumlaufspindel verbunden ist, die mit einem Auswerferbolzen in Wirkverbindung steht.

Die aus den o.g. Dokumenten bekannten Auswerfereinheiten sind nicht nur mit dem Nachteil eines komplizierten Aufbaus sondern auch mit nicht vemachlässigbarem Verschleiß behaftet.

Die Schrift JP 06008289 offenbart eine Auswerfereinrichtung für eine Spritzgießmaschine für Kunststoffe mit einem mittel Aktuatoren bewegbaren Auswerferbolzen, wobei als Aktuatoren Linearmotoren vorgesehen sind, die außerhalb der Zentral-Arbeitsachse der Spritzgießmaschine angeordnet sind.

Aufgabe der Erfindung ist es, eine Auswerfereinrichtung für eine Spritzgießmaschine zu schaffen, die bei konstruktiv einfachem Aufbau und sparsamem Energieverbrauch wartungsarm und sicher ist und nur einen geringen Freiraum im Bereich des Antriebes der beweglichen Werkzeugaufspannplatte beansprucht.

Die Erfindung löst diese Aufgabe durch die Merkmale des Anspruchs 1. Die übrigen Ansprüche beinhalten vorteilhafte Weiterbildungen der Erfindung.

Erfindungsgemäß ist außerhalb der Zentralachse der Spritzgießmaschine ein Linearmotor vorgesehen, der über stangenförmige Kraftübertragungselemente mit dem Auswerferbolzen verbunden ist. Der Linearmotor ist an der beweglichen Werkzeugplatte befestigt und parallel oder rechtwinklig zu deren Hauptachse angeordnet.

Gemäß der Erfindung kommt ein zweiarmiger Hebel zum Einsatz, der einenends winkelbeweglich an einer Konsole der beweglichen Werkzeugaufspannplatte befestigt ist und anderenends über eine Zuglasche mit dem Linearmotor verbunden ist. Etwa mittig ist eine Drucklasche vorgesehen, die mit dem Auswerferbolzen in Wirkverbindung steht.

In einer anderen erfindungsgemäßen Lösung ist ein zweiarmiger Hebel vorgesehen, dessen Ende mit dem Auswerferbolzen verbunden ist, dessen anderes Ende über eine Drucklasche mit dem Linearmotor in Verbindung steht und der etwa mittig über eine Zuglasche mit der beweglichen Werkzeugaufspannplatte in Verbindung steht.

Der zweiarmige Hebel ist so ausgestaltet, daß die Hebelverhältnisse einstellbar sind und in einer Ausgestaltung weist der Hebel verschiedene Halteelemente auf, während in einer weiteren Ausgestaltung der Hebel teleskopartig ausgestaltet ist, um die Hebelverhältnisse des Hebelteils a, welches dem Linearmotor zugeneigt ist und dem Hebelteil b, welches dem Auswerferbolzen zugeneigt ist, einstellen zu können.

In einer Ausgestaltung der zweiten erfindungsgemäßen Lösung ist ein aus einem zweiarmigen und einem einarmigen Hebel gebildestes Getriebe vorgesehen, das über einen ausreichenden Bereich eine Linearführung des Auswerferbolzens ermöglicht. Durch diese Ausgestaltung kann auf den Einsatz eines Lagers des Auswerferbolzens verzichtet werden. Soweit Lager zum Einsatz kommen, werden Gleitlager, insbesondere Sinterlager vorgesehen.

Als Linearmotoren kommen Elektromotoren zum Einsatz, die Kugelumlauf- oder Planetenrollspindeln besitzen. Weiterhin wird vorgeschlagen, als Linearmotore Magnetmotore einzusetzen, bei denen der Induktorkamm entweder mit der beweglichen Werkzeugaufspannplatte oder über eine Druck- oder Zuglasche mit dem zweiarmigen Hebel in Verbindung steht.

Die Ausführungen der Efindung sind in den beigefügten Zeichnungen dargelegt. Dabei zeigen
- Figur 1: Eine Auswerfereinrichtung mit einem zweiarmigen Hebel, der mittig den Auswerferbolzen antreibt.
- Figur 2: Eine Auswerfereinrichtung mit einem zweiarmigen Hebel, bei dem am Ende der Auswerferbolzen angeordnet ist.
- Figur 3: Eine Auswerfereinrichtung, bei der die Hebel ein Getriebe bilden.
- Figur 4: Eine Auswerfereinrichtung, bei der der Linearmotor senkrecht zur Hauptachse angeordnet ist.

Sämtliche Figuren zeigen von einer Spritzgießmaschine 10 eine feststehende Werkzeugaufspannplatte 11 und eine bewegliche Werkzeugaufspannplatte 12. An der beweglichen Werkzeugaufspannplatte 12 ist jeweils ein Linearmotor 21 befestigt, der über hebelförmige Kraftübertragungselemente 30 mit einem Auswerferbolzen 41, der mittig durch die bewegliche Werkzeugaufspannplatte 12 führbar ist, in Wirkverbindung steht.

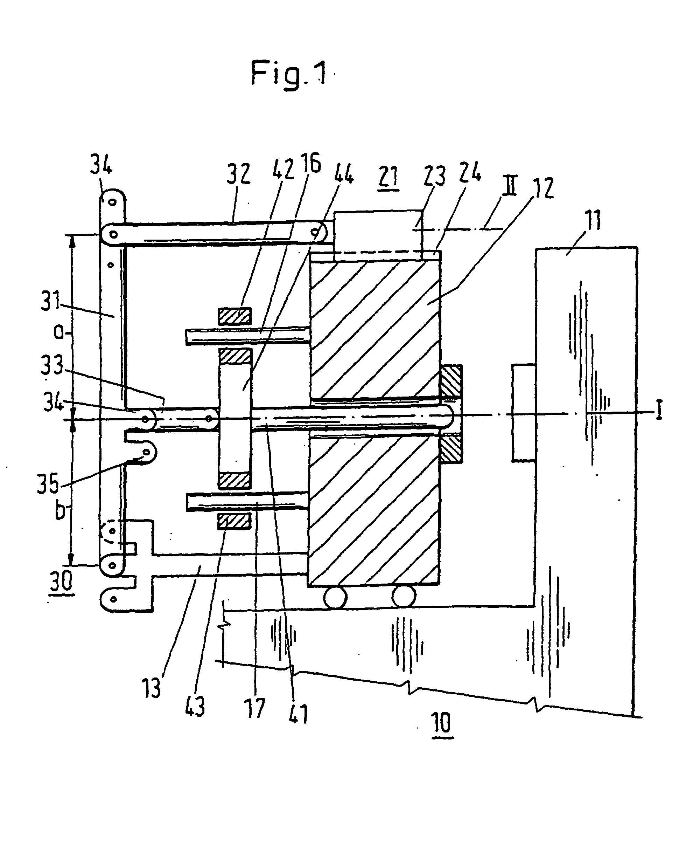

In der Figur 1 ist der Auswerferbolzen 41 an einer Auswerferplatte 44 befestigt, welche Lager 42 und 43 aufweist, die mit an der beweglichen Werkzeugplatte 12 angebrachten Führungsbolzen 16, 17 korrespondieren.

Die Auswerferplatte 44 ist über eine Drucklasche 33 mit einem zweiarmigen Hebel 31 verbunden. Der zweiarmige Hebel 31 ist an einem Ende mit einer Konsole 13 winkelbeweglich befestigt und an seinem anderen Ende über eine Zuglasche 32 mit dem Linearmotor 21 verbunden. Der Linearmotor 21 ist als Magnetmotor 23 ausgestaltet, dessen Induktorkamm 24 am Kopf der Werkzeugaufspann 12 parallel zur Hauptachse I angeordnet ist.

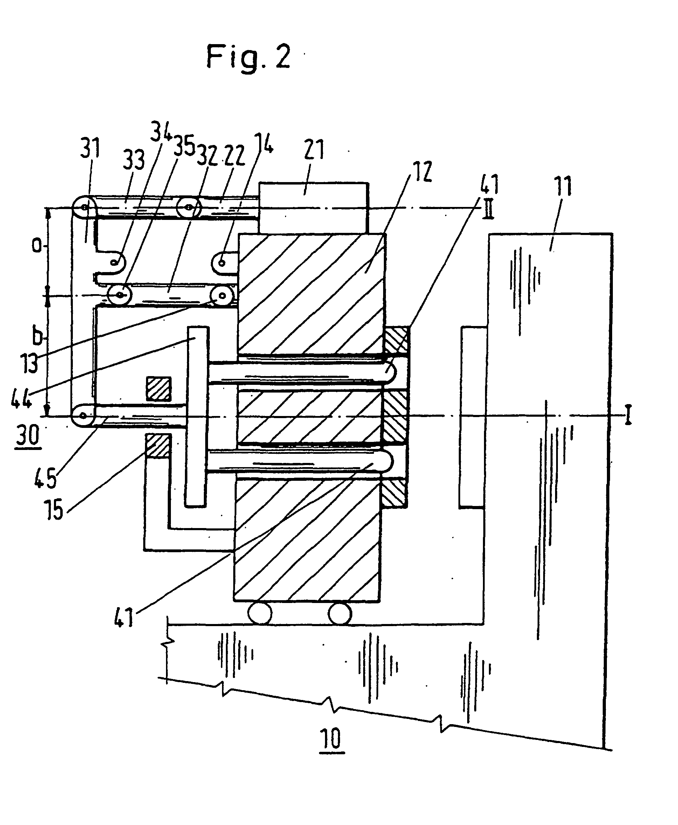

Die Verhältnisse des Hebelarmteils a zum Hebelteil b des zweiarmigen Hebels 31 ist über Halteelemente 34 bzw. 35 im Zusammenspiel mit der Konsole 13 einstellbar. In der Figur 2 sind an der Auswerferplatte 44 zwei Auswerferbolzen 41 vorgesehen. Die Auswerferplatte 44 ist dabei an der Haltestange 45 befestigt, die durch ein Lager 15 geführt wird, welche an der beweglichen Werkzeugaufspannplatte 12 befestigt ist.

Das Ende der Haltestange 45 ist winkelbeweglich an dem einen Ende des zweiarmigen Hebels 31 befestigt.

Der zweiarmige Hebel ist etwa mittig über eine Zuglasche 32 an Konsolen 13 oder 14, welche an der beweglichen Aufspannplatte 12 befestigt sind, gehalten.

Am anderen Ende des zweiarmigen Hebels 31 ist eine Drucklasche 33 vorgesehen, die mit einer Spindel 22 des hier vorgesehen Linearmotors 21 in Wirkverbindung steht.

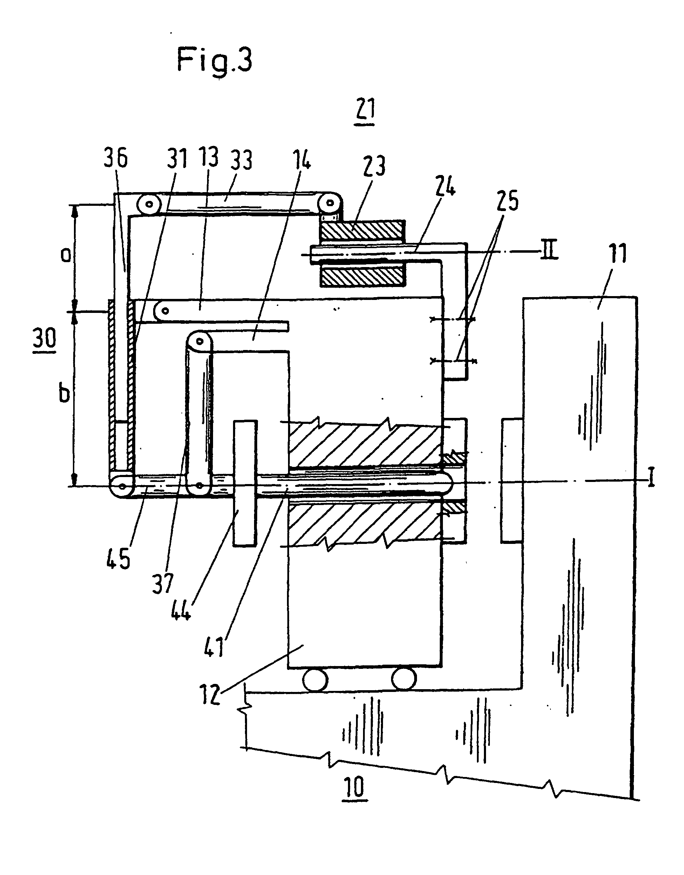

In der Figur 3 ist die mit der Auswerferplatte 44, an der sich der Auswerferbolzen 41 befindet, verbundene Haltestange 45 sowohl an einem einarmigen Hebel 37 wie auch an einem zweiarmigen Hebel 31 angeschlossen. Der einarmige Hebel 37 ist dabei anderenends an eine Konsole 14 angeschlossen, und der zweiarmige Hebel 31 ist etwa mittig über eine Konsole 13 mit der beweglichen Werkzeugaufspannplatte verbunden. Die Gelenkpunkte und die Hebelverhältnisse sind so aufeinander abgestimmt, daß für eine ausreichend große Strecke der Auswerferbolzen 41 auf der Zentralachse I geführt wird.

Der zweiarmige Hebel 31 ist als Teleskop 36 ausgestaltet, so daß stufenlos die Verhältnisse der Hebelarme a bzw. b beliebig einstellbar sind.

Das eine Ende des zweiarmigen Hebelarms 31 ist über eine Drucklasche 33 mit dem Linearmotor 21 verbunden, der als Magnetmotor 23 ausgestaltet ist. Der Induktorkamm 24 weist Verstellelemente 25 auf, die eine Verstellbarkeit der Bewegungsachse II zur Zentralachse I zulassen.

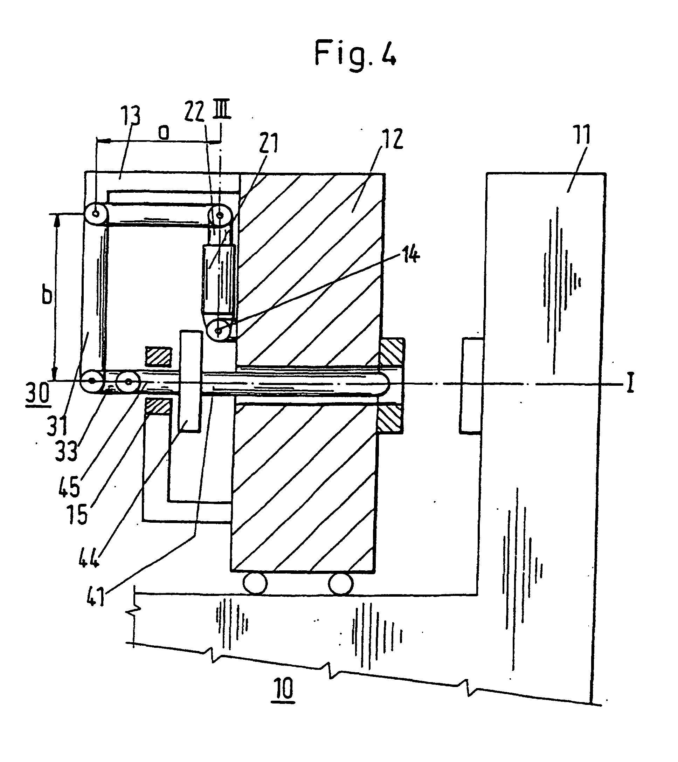

In der Figur 4 ist die Bewegungsachse III senkrecht zur Zentralachse I vorgesehen. Der zum Einsatz kommende Linearmotor 21 ist dabei winkelbeweglich an einer Konsole 14 gehalten.

Der zweiarmige Hebel 31 weist eine winkelförmige Gestalt auf und ist etwa mittig an einer Konsole 13 winkelbeweglich mit der beweglichen Werkzeugaufspannplatte 12 verbunden.

Am anderen Ende des zweiarmigen Hebels 31 ist eine Drucklasche 33 vorgesehen, die an die Haltestange 45 angeschlossen ist, welche mit der Auswerferplatte 44 und dem daran befestigten Auswerferbolzen 41 verbunden ist.

Die Haltestange 45 ist in einem Lager 15 gelagert, welches mit der beweglichen Aufspannplatte 12 in Verbindung steht.

### Positionsliste

- 10: Spritzgießmaschine
- 11: Feststehende Werkzeugaufspannplatte
- 12: Bewegliche Werkzeugaufspannplatte
- 13: Konsole
- 14: Konsole
- 15: Lager
- 16,17: Führungsbolzen

### Aktuator

- 21: Linearmotor
- 22: Spindel
- 23: Magnetmotor
- 24: Induktorkamm
- 25: Verstellelement

### Kraftübertragungselemente

- 31: Zweiarmiger Hebel
- 32: Zuglasche
- 33: Drucklasche
- 34,35: Halteelement
- 36: Teleskop
- 37: Einarmiger Hebel

### Auswerfen

- 41: Auswerferbolzen
- 42, 43: Auswerferlager
- 44: Auswerferplatte
- 45: Haltestange

- I: Zentralachse
- II: Bewegungsachse des Linearmotors
- III: Bewegungsrichtung des Linearmotors senkrecht zur Zentralachse
- a: Im Linearmotor zugeneigter Hebelteil
- b: Dem Auswerferbolzen zugeneigter Hebelteil

## Patentansprüche

1. Auswerfereinrichtung für eine Spritzgießmaschine für Kunststoffe mit mindestens einem Auswerferbolzen, der von einem Aktuator durch das Zentrum einer beweglichen Werkzeugaufspannplatte hindurch zur Form hin und von dieser wegbewegbar ist, wobei als Aktuator ein Linearmotor (21) vorgesehen ist, der außerhalb der Zentralachse (I) an der beweglichen Aufspannplatte (12) angeordnet ist, und der
mit dem Auswerferbolzen (41) in Wirkverbindung steht,
**dadurch gekennzeichnet,**
**dass** die Wirkverbindung zwischen dem Linearmotor (21) und dem/den Auswerferbolzen (41) durch stangenförmige Kraftübertragungselemente (30) erfolgt, dass die Kraftübertragungselemente (30) mindestens einen zweiarmigen Hebel (31) aufweisen, der einenends über eine Zuglasche (32) mit dem Linearmotor (21) verbunden und anderenends an einer an der beweglichen Aufspannplatte (12) vorgesehenen Konsole (13) winkelbeweglich befestigt ist, und
**daß** der Hebel (31) etwa mittig über eine Drucklasche (33) mit dem Auswerferbolzen (31) verbunden ist.

2. Auswerfereinrichtung für eine Spritzgießmaschine für Kunststoffe mit mindestens einem Auswerferbolzen, der von einem Aktuator durch das Zentrum einer beweglichen Werkzeugaufspannplatte hindurch zur Form hin und von dieser wegbewegbar ist, wobei als Aktuator ein Linearmotor (21) vorgesehen ist, der außerhalb der Zentralachse (I) an der beweglichen Aufspannplatte (12) angeordnet ist, und der
mit dem Auswerferbolzen (41) in Wirkverbindung steht,
**dadurch gekennzeichnet,**
**dass** die Wirkverbindung zwischen dem Linearmotor (21) und dem/den Auswerferbolzen (41) durch stangenförmige Kraftübertragungselemente (30) erfolgt, dass die Kraftübertragungselemente (30) mindestens einen zweiarmigen Hebel (31) aufweisen, der einenends über eine Drucklasche (33) mit dem Linearmotor (21) und anderenends mit dem Auswerferbolzen (41) verbunden ist, und
**dass** der Hebel (31) etwa mittig über eine Zuglasche (32) und eine Konsole (13, 14) mit der beweglichen Aufspannplatte (12) verbunden ist.

3. Auswerfereinrichtung nach einem der Ansprüche 1 oder 2,
**dadurch gekennzeichnet,**
**daß** der zweiarmige Hebel (31) mindestens zwei Halteelemente (34, 35) besitzt, durch die die Länge (a) des dem Antrieb zugeneigten Hebelteils und die Länge (b) des übrigen Hebelteils veränderbar ist.

4. Auswerfereinrichtung nach Anspruch 2,
**dadurch gekennzeichnet,**
**daß** die Kraftübertragungselemente (30) einen zweiarmigen Hebel (31) aufweisen, der zusammen mit einem zum Hebel (31) in etwa parallel angeordneten einarmigen Hebel (37) ein Getriebe bildet, mit dem der Auswerferbolzen (41) über einen vorgebbaren Bereich linear und dabei parallel zur Bewegungsachse (II) des Linearmotors (21) bewegbar ist, wobei der zweiarmige Hebel (31) einenends über eine Drucklasche (33) und Haltestange (45) mit dem Auswerferbolzen (41) und über den zweiarmigen Hebel (31) mit dem Linearmotor (21) verbunden ist, und
**dass** an der beweglichen Werkzeugaufspannplatte (12) Konsolen (13,14) vorgesehen sind, an denen die Hebel (31, 37) winkelbeweglich befestigt sind.

5. Auswerfereinrichtung nach einem der o.g. Ansprüche,
**dadurch gekennzeichnet,**
**daß** an der beweglichen Werkzeugaufspannplatte (12) ein Lager (15) vorgesehen ist, das eine behinderungsfreie Linearbewegung des Auswerferbolzens (41) erlaubt.

6. Auswerfereinrichtung nach einem der o.g. Ansprüche,
**dadurch gekennzeichnet,**
**daß** an der beweglichen Werkzeugaufspannplatte (12) Führungsbolzen (16, 17) vorgesehen sind, die mit Lagern (42, 43) mit einer Auswerferplatte (44) in Verbindung stehen, an denen mindestens ein Auswerferbolzen (41) befestigt ist.

7. Auswerfereinrichtung nach Anspruch 5 oder 6,
**dadurch gekennzeichnet,**
**daß** das Lager (15, 42, 43) als Gleitlager, beispielsweise als Sinterlager ausgestaltet ist.

8. Auswerfereinrichtung nach Anspruch 1,
**dadurch gekennzeichnet,**
**daß** der Linearmotor (21) eine durch einen elektrischen Motor angetriebene Kugelumlauf- oder Planetenrollspindel (22) aufweist.

9. Auswerfereinrichtung nach Anspruch 1,
**dadurch gekennzeichnet,**
**dass** der Linearmotor (21) ein Magnetmotor (23) ist, dessen Induktorkamm (24) über eine Drucklasche (33) mit dem zweiarmigen Hebel (31) verbunden ist.

10. Auswerfereinrichtung nach Anspruch 1,
**dadurch gekennzeichnet,**
**daß** der Linearmotor (21) ein Magnetmotor (23) ist, der mit einem an der beweglichen Aufspannplatte (12) befestigten Induktorkamm (24) in Wirkverbindung steht.

11. Auswerfereinrichtung nach Anspruch 10,
**dadurch gekennzeichnet,**
**daß** der Induktorkamm (24) Verstellelemente (25) aufweist, mit dem er an der beweglichen Werkzeugaufspannplatte (12) in der Höhe verstellbar befestigt ist.

12. Auswerfereinrichtung nach Anspruch 1,
**dadurch gekennzeichnet,**
**daß** der zweiarmiger Hebel (31) als Teleskop (36) ausgestaltet ist, durch das die Längsverhältnisse der Hebelteile (a, b) stufenlos veränderbar ist.

## Claims

1. An ejector means for an injection-moulding machine for plastics, comprising at least one ejector plunger which can be moved by an actuator through the centre of a movable platen towards the mould and away therefrom, with a linear motor (21) being provided as actuator, which motor is located outside the central axis (I) on the movable platen (12) and which is actively connected to the ejector plunger (41 ),
**characterised in that**
the active connection between the linear motor (21) and the ejector plunger(s) (41) is provided by rod-shaped force transmission elements (30),
that the force transmission elements (30) have at least one two-armed lever (31) which is connected in angularly moveable manner at one end to the linear motor (21) via a pull bar (32) and at the other end to a bracket (13) provided on the movable platen (12), and
that the lever (31) is connected approximately centrally to the ejector plunger (31) via a push bar (33).

2. An ejector means for an injection-moulding machine for plastics, comprising at least one ejector plunger which can be moved by an actuator through the centre of a movable platen towards the mould and away therefrom, with a linear motor (21) being provided as actuator, which motor is located outside the central axis (I) on the movable platen (12) and which is actively connected to the ejector plunger (41),
**characterised in that**
the active connection between the linear motor (21) and the ejector plunger(s) (41) is provided by rod-shaped force transmission elements (30),
that the force transmission elements (30) have at least one two-armed lever (31) which is connected at one end to the linear motor (21) via a push bar (33) and at the other end to the ejector plunger (41), and
that the lever (31) is connected approximately centrally to the moveable platen (12) via a pull bar (32) and a bracket (13, 14).

3. An ejector means according to one of Claims 1 or 2, **characterised in that** the two-armed lever (31) has at least two holding elements (34, 35) by means of which the length (a) of the part of the lever inclined towards the drive and the length (b) of the remaining part of the lever can be changed.

4. An ejector means according to Claim 2, **characterised in that** the force transmission elements (30) have a two-armed lever (31) which together with a one-armed lever (37) arranged approximately in parallel to the lever (31) forms a gear by means of which the ejector plunger (41) can be moved over a pre-settable region linearly and parallel to the axis of movement (II) of the linear motor (21 ), the two-armed lever (31) being connected at one end to the ejector plunger (41) via a push bar (33) and holding rod (45) and to the linear motor (21) via the two-armed lever (31), and
that brackets (13, 14) to which the levers (31, 37) are fastened in angularly movable manner are provided on the movable platen (12).

5. An ejector means according to one of the preceding claims, **characterised in that** a bearing (15) is provided on the movable platen (12) which permits hindrance-free linear movement of the ejector plunger (41).

6. An ejector means according to one of the preceding claims, **characterised in that** guide members (16, 17) are provided on the movable platen (12) which are connected by bearings (42, 43) to an ejector plate (44) to which at least one ejector plunger (41) is fastened.

7. An ejector means according to Claim 5 or 6, **characterised in that** the bearing (15, 42, 43) is in the form of a sliding bearing, for example as a sintered bearing.

8. An ejector means according to Claim 1, **characterised in that** the linear motor (21) has a ball screw drive or planetary roller screw drive (22) which is driven by an electric motor.

9. An ejector means according to Claim 1, **characterised in that** the linear motor (21) is a magnet motor (23), the inductor (24) of which is connected to the two-armed lever (31) via a push bar (33).

10. An ejector means according to Claim 1, **characterised in that** the linear motor (21) is a magnet motor (23) which is actively connected to an inductor (24) fastened to the movable platen (12).

11. An ejector means according to Claim 10, **characterised in that** the inductor (24) has adjustment elements (25) by means of which it is fastened in vertically adjustable manner to the movable platen (12).

12. An ejector means according to Claim 1, **characterised in that** the two-armed lever (31) is in the form of a telescope (36) by which the length ratios of the lever parts (a, b) can be infinitely altered.

## Revendications

1. Dispositif d'éjection d'une presse à injecter pour plastiques comportant au moins une tige d'éjection qui peut être rapprochée et éloignée du moule par un actionneur en traversant le centre d'un plateau porte-moule mobile, un moteur linéaire (21) étant prévu comme actionneur, lequel est agencé à l'extérieur de l'axe central (I) sur le plateau porte-moule mobile (12) et est en relation active avec la tige d'éjection (41),
**caractérisé en ce que** la relation active entre le moteur linéaire (21) et la ou les tige(s) d'éjection (41) est réalisée par des éléments de transmission de force (30) en forme de tiges, **en ce que** les éléments de transmission de force (30) présentent au moins un levier à deux bras (31) qui, par une extrémité, est relié par l'intermédiaire d'une attache de traction (32) au moteur linéaire (21) et, par l'autre extrémité, est fixé sur une console (13), prévue sur le plateau porte-moule mobile (12), de manière à pouvoir effectuer des mouvements angulaires, et **en ce que** le levier (31) est relié de manière à peu près centrale à la tige d'éjection (31) par l'intermédiaire d'une attache de compression (33).

2. Dispositif d'éjection d'une presse à injecter pour plastiques comportant au moins une tige d'éjection qui peut être rapprochée et éloignée du moule par un actionneur en traversant le centre d'un plateau porte-moule mobile, un moteur linéaire (21) étant prévu comme actionneur, lequel est agencé à l'extérieur de l'axe central (I) sur le plateau porte-moule mobile (12) et est en relation active avec la tige d'éjection (41),
**caractérisé en ce que** la relation active entre le moteur linéaire (21) et la ou les tige(s) d'éjection (41) est réalisée par des éléments de transmission de force (30) en forme de tiges, **en ce que** les éléments de transmission de force (30) présentent au moins un levier à deux bras (31) qui, par une extrémité, est relié par l'intermédiaire d'une attache de compression (33) au moteur linéaire (21) et, par l'autre extrémité, à la tige d'éjection (41), et **en ce que** le levier (31) est relié de manière à peu près centrale au plateau porte-moule mobile (12) par l'intermédiaire d'une attache de traction (32) et d'une console (13, 14).

3. Dispositif d'éjection selon l'une des revendications 1 ou 2, **caractérisé en ce que** le levier à deux bras (31) possède au moins deux éléments de retenue (34, 35) par lesquels il est possible de modifier la longueur (a) de la partie de levier tendant vers la commande et la longueur (b) de l'autre partie de levier.

4. Dispositif d'éjection selon la revendication 2, **caractérisé en ce que** les éléments de transmission de force (30) présentent un levier à deux bras (31) qui, avec un levier à bras unique (37) agencé à peu près parallèlement au levier (31), forme un mécanisme avec lequel la tige d'éjection (41) peut être déplacée de manière linéaire sur une zone pouvant être prédéterminée et parallèlement à l'axe de déplacement (II) du moteur linéaire (21), le levier à deux bras (31) étant relié, par une extrémité, à la tige d'éjection (41) par l'intermédiaire d'une attache de compression (33) et d'une tige de retenue (45) et au moteur linéaire (21) par l'intermédiaire du levier à deux bras (31), et **en ce que** des consoles (13, 14) sont prévues sur le plateau porte-moule mobile (12), sur lesquelles les leviers (31, 37) sont fixés de manière à pouvoir effectuer des mouvements angulaires.

5. Dispositif d'éjection selon l'une des revendications précédentes, **caractérisé en ce qu'**il est prévu sur le plateau porte-moule mobile (12) un palier 15 qui permet un mouvement linéaire sans entrave de la tige d'éjection (41).

6. Dispositif d'éjection selon l'une des revendications précédentes, **caractérisé en ce qu'**il est prévu sur le plateau porte-moule mobile (12) des colonnes de guidage (16, 17) qui sont en relation par des paliers (42, 43) avec une plaque d'éjection (44) sur laquelle est fixée au moins une tige d'éjection (41).

7. Dispositif d'éjection selon la revendication 5 ou 6, **caractérisé en ce que** le palier (15, 42, 43) est conçu sous forme de palier lisse, par exemple de palier fritté.

8. Dispositif d'éjection selon la revendication 1, **caractérisé en ce que** le moteur linéaire (21) présente une vis à billes ou une broche à rouleaux planétaires (22) entraînée par un moteur électrique.

9. Dispositif d'éjection selon la revendication 1, **caractérisé en ce que** le moteur linéaire (21) est un moteur à réluctance (23), dont le peigne d'induction (24) est relié au levier à deux bras (31) par l'intermédiaire d'une attache de compression (33).

10. Dispositif d'éjection selon la revendication 1, **caractérisé en ce que** le moteur linéaire (21) est un moteur à réluctance (23) qui est en relation active avec un peigne d'induction (24) fixé sur le plateau porte-moule mobile (12).

11. Dispositif d'éjection selon la revendication 10, **caractérisé en ce que** le peigne d'induction (24) présente des éléments de réglage (25), avec lesquels il est fixé de manière réglable en hauteur sur le plateau porte-moule mobile (12).

12. Dispositif d'éjection selon la revendication 1, **caractérisé en ce que** le levier à deux bras (31) est conçu sous forme télescopique (36), par lequel les rapports de longueur des parties de levier (a, b) peuvent être modifiés de façon progressive.
